# EUROPÄISCHE PATENTSCHRIFT

(11) **EP 1 442 269 B1**
(45) Veröffentlichungstag und Bekanntmachung des Hinweises auf die Patenterteilung: **17.04.2013**
(21) Anmeldenummer: 02782919.1
(22) Anmeldetag: 16.10.2002
(51) Int. Cl.: G01B 11/02, G01B 11/26, G01B 9/02, G01B 5/008

(54) **POSITIONSMESSGERÄT**
POSITION MEASURING DEVICE
APPAREIL DE MESURE DE POSITION

(30) Priorität: 23.10.2001 DE 10151563
(43) Veröffentlichungstag der Anmeldung: 04.08.2004
(73) Patentinhaber: Dr. Johannes Heidenhain GmbH, 83292 Traunreut (DE)
(72) Erfinder: BRAASCH, Jan, 83352 Altenmarkt (DE); HOLZAPFEL, Wolfgang, 83119 Obing (DE); SEYFRIED, Volker, 69226 Nussloch (DE); TONDORF, Sebastian, 83329 Waging am See (DE)
(86) Internationale Anmeldenummer: PCT/EP2002/011544
(87) Internationale Veröffentlichungsnummer: WO 2003/036226

(56) Entgegenhaltungen:
- WO-A-01/38828
- DE-A- 19 703 735
- US-A- 5 909 939

## Beschreibung

Die Erfindung betrifft ein Positionsmessgerät zur Erfassung der Position eines beweglichen Elementes relativ zu einem Grundkörper.

Eine Bewegung eines Elementes in Längsrichtung einer Stütze mit einer Längenmesseinrichtung zu messen, ist beispielsweise in der DE 197 03 735 A1 erläutert.

Eine Winkelmesseinrichtung zur Messung eines Winkels zwischen einem beweglichen Element und einem Grundkörper mit einer Lichtquelle, einem Detektor und einem Gitter im Strahlengang zwischen der Lichtquelle und dem Detektor ist in der WO 01/38828 A1 beschrieben. Der Strahlengang zur Winkelmessung verläuft dabei zwischen dem beweglichen Element und dem Grundkörper, indem durch Beleuchtung des Gitters mit der Lichtquelle ein Intensitätsstreifenmuster erzeugt wird, dessen Lage relativ zum Detektor ein Maß für den Winkel ist.

Aus der DE 195 34 535 C2, entsprechend der US 5,909,939 A, und der DE 35 04 464 C1 ist jeweils ein Positionsmessgerät bekannt, bei dem die räumliche Lage eines beweglichen Elementes gegenüber einem Grundkörper über mehrere räumlich zueinander angeordneter Teleskopstäbe aufgrund von Längenmessungen in den Teleskopstäben ermittelt wird. Als Verwendungszweck eines derartigen Positionsmessgerätes ist in der DE 35 04 464 C1 die Überprüfung der Positioniergenauigkeit eines programmgesteuerten Gerätearmes angeführt.

Nachteilig bei diesen letztgenannten Positionsmessgeräten ist die Anordnung mehrerer Teleskopstäbe, um die räumliche Lage des beweglichen Elementes in drei Freiheitsgraden zu bestimmen. Die Teleskopstäbe müssen in einer vorgegebenen Lage zueinander angeordnet sein, um nach einer vorgegebenen Rechenregel aus dem Zusammenhang der Längen der Teleskopstäbe die räumliche Lage des beweglichen Teils zu bestimmen.

Aufgabe der Erfindung ist es daher, den Aufbau eines Positionsmessgeräts zur Erfassung der räumlichen Lage eines beweglichen Elementes gegenüber einem Grundkörper zu vereinfachen.

Gelöst wird diese Aufgabe durch die Merkmale des Anspruches 1.

Ein Vorteil der Erfindung wird darin gesehen, dass mit einem einzigen Teleskopbein mit einfachem Aufbau die Bewegung des zu messenden beweglichen Elementes in zumindest drei Freiheitsgraden messbar ist, nämlich in einem translatorischen und zwei rotatorischen.

Vorteilhafte Ausgestaltungen des Positionsmessgeräts sind in den abhängigen Ansprüchen angegeben.

Einzelheiten und weitere Vorteile ergeben sich aus der nachfolgenden Beschreibung von Ausführungsbeispielen anhand der Zeichnungen.

Es zeigt:
- Figur 1: ein Positionsmessgerät zur Messung der räumlichen Lage eines bewegten Elementes,
- Figur 2: das Funktionsprinzip der Winkelmesseinrichtung des Positionsmessgeräts nach Figur 1,
- Figur 3: ein weiteres Positionsmessgerät zur Messung der räumlichen Lage eines bewegten Elementes mit interferometrischer Längenmessung,
- Figur 4: eine Verwendung des Positionsmessgeräts zur Erfassung eines bewegten Elementes in sechs Freiheitsgraden und
- Figur 5: eine Verwendung des Positionsmessgeräts in einer Maschine.

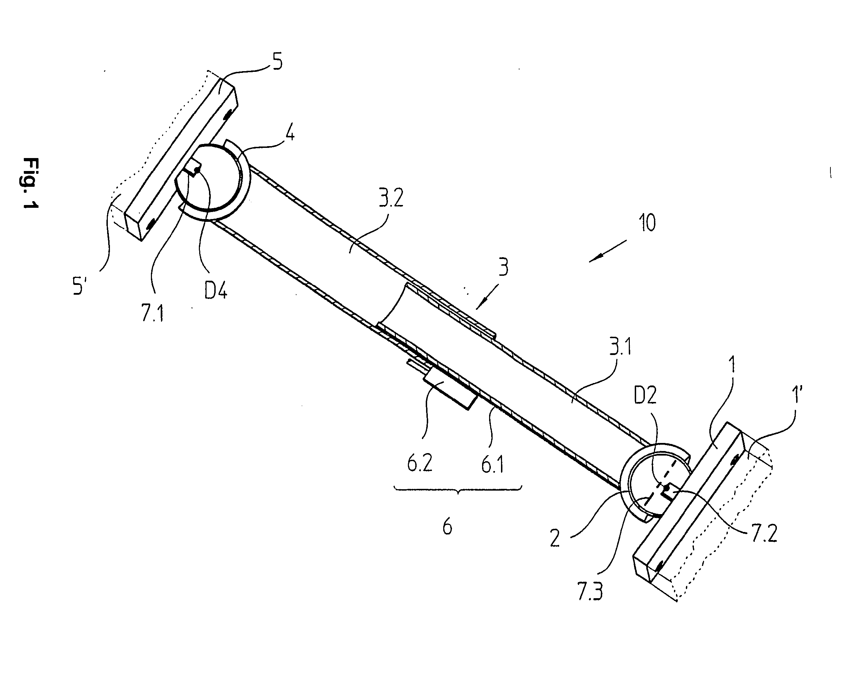

In Figur 1 ist der Grundaufbau eines Positionsmessgeräts 10 gemäß der Erfindung schematisch dargestellt. Es besteht aus einem Grundkörper 1 mit einem Gelenk 2, über das allseitig schwenkbar eine Stütze 3 am Grundkörper 1 gelagert ist. Die Stütze 3 ist teleskopartig ausgebildet und besteht aus zumindest zwei ineinanderschiebbare Rohre 3.1 und 3.2. Das eine Rohr 3.1 ist als Teleskopteil am Gelenk 2 gelagert und das andere Rohr 3.2 ist über ein weiteres Gelenk 4 allseitig schwenkbar an dem zu messenden Element 5 gelagert.

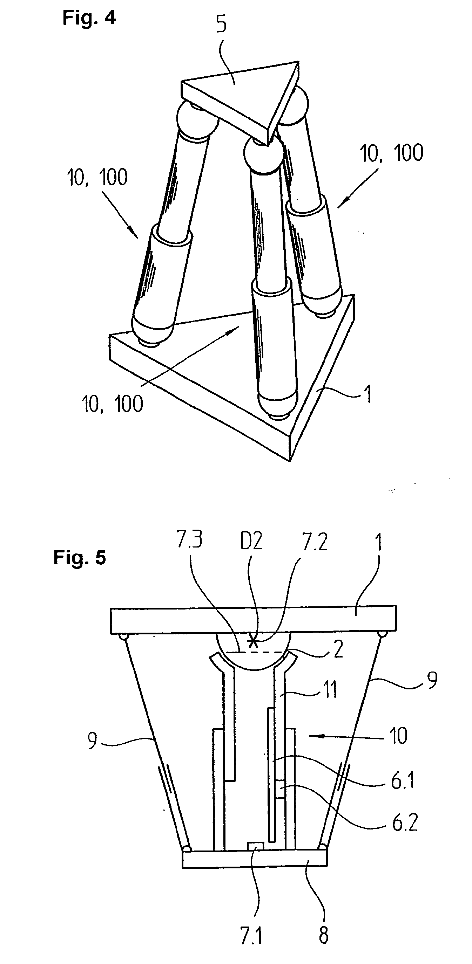

Die Bewegung des Elementes 5 in Längsrichtung der Stütze 3 wird mit einer Längenmesseinrichtung 6 gemessen. Diese besteht aus einem Maßstab 6.1, der an einem der Rohre 3.1 befestigt ist und aus einer Abtasteinheit 6.2, die an dem anderen Rohr 3.2 befestigt ist. Zur redundanten Längenmessung können mehrere derartige Längenmesseinrichtungen eingesetzt werden, insbesondere sind diese symmetrisch zu einer zwischen den zwei Gelenken 2, 4 liegenden zentrischen Verbindungslinie angeordnet, wie in der DE 197 03 735 C2 in Figur 5 dargestellt.

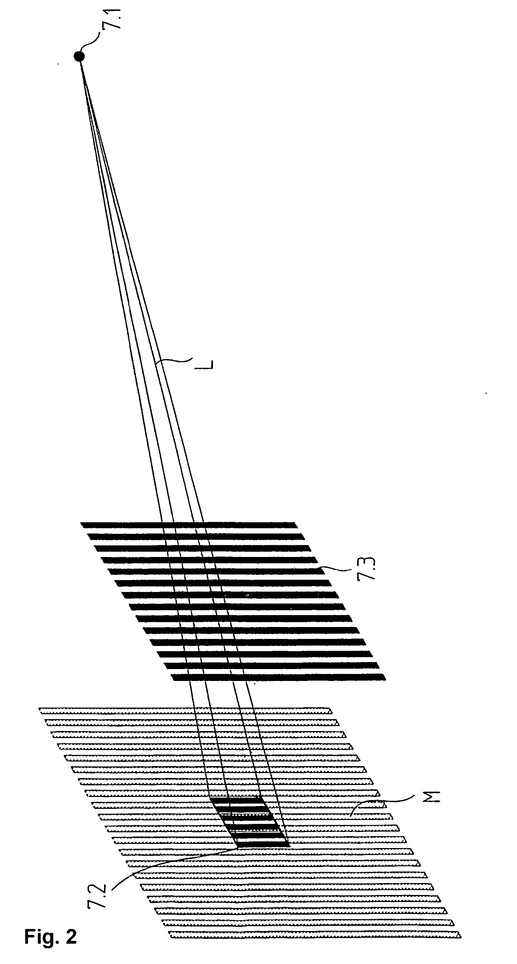

Die seitliche Verlagerung des Elementes 5 relativ zum Grundkörper 1 führt zu einer Schwenkbewegung der Stütze 3 gegenüber dem Grundkörper 1. Diese Schwenkbewegung wird mittels einer Winkelmesseinrichtung 7 gemessen. Sie besteht aus einer Lichtquelle 7.1, einem Detektor 7.2 und einem Gitter 7.3. Die Lichtquelle 7.1 ist im Drehpunkt D4 des Gelenkes 4 am Element 5 fest angeordnet und sendet entlang der Stütze 3 ein divergentes Strahlenbündel L aus (Figur 2). Innerhalb des Lichtstrahlenbündels L befindet sich im Drehpunkt D2 des Gelenkes 2 am Grundkörper 1 der Detektor 7.2. In einem festen Abstand befindet sich vor dem Detektor 7.2 ebenfalls am Grundkörper 1 befestigt und somit dem Detektor 7.2 fest zugeordnet das Gitter 7.3. Durch Beleuchtung des Gitters 7.3 mittels des divergenten Lichtstrahlenbündels L wird ein Intensitätsstreifenmuster M erzeugt, dessen Lage relativ zum Detektor 7.2 ein Maß für die Schwenkbewegung der Stütze 3 und somit der seitlichen Verlagerung des Elementes 5 ist.

Durch die Anordnung der Lichtquelle 7.1 und des Detektors 7.2 direkt an dem Grundkörper 1 bzw. dem zu messenden Element 5 fließen Gelenkfehler der Gelenke 2 und 4 sowie Übertragungsfehler der Stütze 3 nicht in die Winkelmessung ein. Der Strahlengang zur Winkelmessung verläuft zwischen dem beweglichen Element 5 und dem Grundkörper 1. Dabei ist in einem der Drehpunkte D2, D4 die Lichtquelle 7.1 und im anderen Drehpunkt D4, D2 der Schwerpunkt der lichtempfindlichen Elemente des Detektors 7.2 angeordnet. In nicht gezeigter Weise kann auch in einem Drehpunkt D2, D4 die Lichtquelle 7.1 sowie der Detektor 7.2 angeordnet sein und im anderen Drehpunkt D4, D2 ein retroreflektierendes Element. Dabei ist eine Strahltrennung vorteilhaft, so dass das Lichtstrahlenbündel nur in einer Richtung durch das Gitter 7.3 läuft. Der Detektor 7.2 oder die Lichtquelle 7.1 befindet sich dann am durch den Strahlteiler gespiegelten bzw. abgebildeten Ort des Drehpunktes D2 bzw. D4. Das Gitter 7.3 ist entweder der Lichtquelle 7.1 oder dem Detektor 7.2 räumlich fest zugeordnet.

Um die seitliche Verlagerung des Elementes 5 in alle Richtungen quer zur Längsrichtung der Stütze 3 zu messen, also den Schwenkwinkel des Elementes 5 um den Drehpunkt D2, ist das Gitter 7.3 eine zweidimensionale Struktur, beispielsweise ein zweidimensionales Kreuzgitter, so dass bei der Beleuchtung ein zweidimensionales Intensitätsmuster M entsteht, dessen Lage relativ zum Detektor 7.2 ein Maß für den Winkel des Elementes 5 gegenüber dem Grundkörper 1 ist.

Der Detektor 7.2 besteht vorzugsweise aus mehreren lichtempfindlichen Elementen zur Erzeugung mehrerer gegeneinander phasenverschobener elektrischer sinusförmiger Abtastsignale. Der Flächenschwerpunkt der lichtempfindlichen Elemente zur Erzeugung eines Abtastsignals liegt im gezeigten Beispiel jeweils im Drehpunkt D2.

In Figur 2 ist das an sich aus der WO 01/38828 A1 bekannte Prinzip der Winkelmessung anhand eines eindimensionalen Gitters 7.3 dargestellt. Bezüglich Details des Prinzips wird ausdrücklich auf die Offenbarung der WO 01/38828 A1 verwiesen.

Die Gelenke 2 und 4 sind kardanische Aufhängungen oder magnetisch vorgespannte spielfreie Kugelgelenke, wie sie in der einleitend erwähnten DE 35 04 464 C1 beschrieben sind.

Die Stütze 3 bildet vorteilhafterweise eine Längsführung der Abtasteinheit 6.2 gegenüber dem Maßstab 6. Die Stütze 3 bildet weiterhin eine Abdeckung für die Winkelmesseinrichtung 7 und schützt somit vor Fremdlicht und vor Umwelteinflüssen.

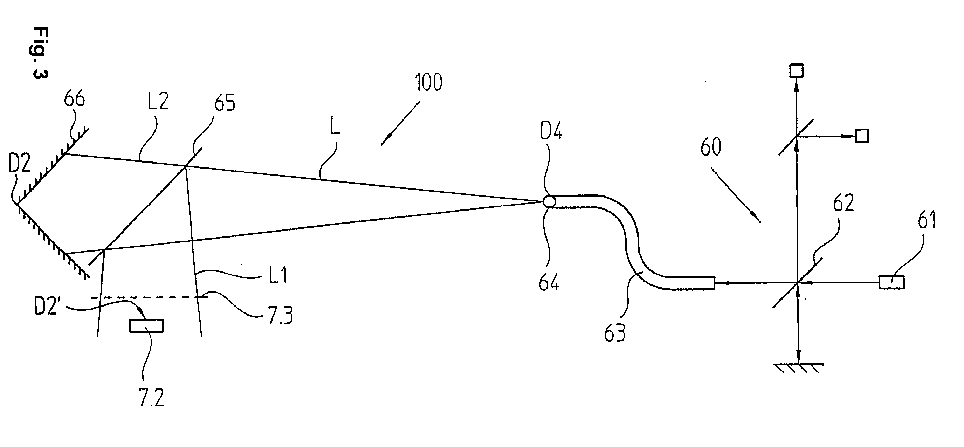

In Figur 3 ist ein weiteres Ausführungsbeispiel eines Positionsmessgeräts 100 dargestellt. Als Längenmesseinrichtung wird hier ein Interferometer 60 eingesetzt. Es besteht beispielsweise aus einem Laser 61, einem Strahlteiler 62 und einer Lichtleitfaser 63 mit Kugelkopf 64 als Lichtquelle. Der Kugelkopf 64 befindet sich im Drehpunkt D4. Das divergierende Lichtstrahlenbündel L gelangt auf einen Strahlteiler 65 zur Erzeugung zweier Lichtanteile L1 und L2. Der eine Lichtanteil L1 dient zur oben beschriebenen Winkelmessung, indem das divergierende Lichtstrahlenbündel L1 winkelabhängig von dem Gitter 7.3 moduliert wird und das Intensitätsmuster M von dem Detektor 7.2 erfasst wird. Der andere Lichtanteil L2 gelangt zu einem Retroreflektor 66, wird dort reflektiert und wieder in die Lichtleitfaser 63 eingekoppelt. Die Auswertung des reflektierten Lichtstrahlenbündels L2 und interferentielle Ermittlung der Längsverschiebung des beweglichen Elementes 5 gegenüber dem Grundkörper 1 entlang der in Figur 3 nicht dargestellten Stütze 3 erfolgt in an sich bekannter Weise.

Der Mittelpunkt des Retroreflektors 66 befindet sich im Drehpunkt D2 und der Detektor 7.2 im durch den Strahlenteiler 65 erzeugten Bild D2' des Drehpunktes D2. Es ist auch die Umkehrung möglich, indem sich dann der Detektor 7. 2 im Drehpunkt D2 und der Mittelpunkt des Retroreflektors 66 im Bild D2' befindet.

Die oben beschriebenen Positionsmessgeräte 10, 100 werden vorteilhafterweise zur Überprüfung der Positioniergenauigkeit eines programmgesteuerten Maschinenteils verwendet, indem das bewegliche Element 5 an dem programmgesteuerten Maschinenteil, beispielsweise einem Gerätearm eines Roboters oder einer Spindel einer Werkzeugmaschine festgelegt ist und der Grundkörper 1 an einem Basisteil der Maschine, also dem Werkstückträger einer Werkzeugmaschine festgelegt ist. Die Spindel 5' einer Werkzeugmaschine sowie der Werkstückträger 1' ist in Figur 1 schematisch gestrichelt dargestellt.

In Figur 4 ist die Verwendung oben beschriebener Positionsmessgeräte 10 bzw. 100 zur Erfassung eines bewegten Elementes 5 in sechs Freiheitsgraden dargestellt. Zur Erfassung der räumlichen Lage des Elementes 5 sowie der Orientierung des plattenförmigen Elementes 5 gegenüber dem Grundkörper 1 sind drei teleskopartige Positionsmessgeräte 10 bzw. 100 einerseits gelenkig am Grundkörper 1 und andererseits gelenkig am Element 5 angeordnet.

Sollen nur fünf Freiheitsgrade erfasst werden, reichen zwei Positionsmessgeräte 10 bzw. 100 aus.

In Figur 5 ist beispielsweise eine weitere Verwendung der Positionsmessgeräte 10 bzw. 100 gezeigt. Bei einer Werkzeugmaschine ist ein Spindelträger 8 über mehrere längenveränderliche Streben 9 in der räumlichen Lage sowie Orientierung einstellbar. Der Spindelträger 8 ist über eine Zentralsäule 11 allseitig schwenkbar und längenveränderlich am Grundkörper 1 angelenkt. Die Neigung der Zentralsäule 11 und somit die Orientierung des Spindelträgers 8 gegenüber dem Drehpunkt D2 sowie die Längsverschiebung des Spindelträgers 8 in Richtung der Längsachse der Zentralsäule 11 ist mittels eines erfindungsgemäßen Positionsmessgerätes 10 bzw. 100 messbar.

## Patentansprüche

1. Positionsmessgerät, zur Erfassung der räumlichen Lage eines beweglichen Elementes (5) relativ zu einem Grundkörper (1), umfassend:
- eine längenveränderliche Stütze (3, 11), die das bewegliche Element (5, 8) mit dem Grundkörper (1) verbindet;
- ein Gelenk (2), mit dem die Stütze (3, 11) um einen Drehpunkt (D2) im Grundkörper (1) schwenkbar gelagert ist;
- eine Längenmesseinrichtung (6) zur Messung des Abstandes des beweglichen Elementes (5, 8) gegenüber dem Grundkörper (1) entlang der Stütze (3, 11);
- eine Winkelmesseinrichtung (7) zur Messung eines Winkels zwischen dem beweglichen Element (5, 8) und dem Grundkörper (1) mit zumindest einer Lichtquelle (7.1), einem Detektor (7.2) und einem Gitter (7.3) im Strahlengang zwischen der Lichtquelle (7.1) und dem Detektor (7.2), wobei der Strahlengang (L) zu der Messung des Winkels zwischen dem beweglichen Element (5, 8) und dem Grundkörper (1) verläuft, indem durch Beleuchtung des Gitters (7.3) mit der Lichtquelle (7.1) ein Intensitätsstreifenmuster (M) erzeugt wird, dessen Lage relativ zum Detektor (7.2) ein Maß für den Winkel ist.

2. Positionsmessgerät nach Anspruch 1, **dadurch gekennzeichnet, dass** zwischen der Stütze (3) und dem beweglichen Element (5) ein weiteres Gelenk (4) angeordnet ist, mit dem das bewegliche Element (5) um einen Drehpunkt (D4) an der Stütze (3) schwenkbar gelagert ist.

3. Positionsmessgerät nach Anspruch 1, **dadurch gekennzeichnet, dass** im Drehpunkt (D2) die Lichtquelle (7.1) oder der Schwerpunkt der lichtempfindlichen Elemente des Detektors (7.2) angeordnet ist.

4. Positionsmessgerät nach Anspruch 2, **dadurch gekennzeichnet, dass** in einem Drehpunkt (D2, D4) die Lichtquelle (7.1) und im anderen Drehpunkt (D4, D2) der Schwerpunkt der lichtempfindlichen Elemente des Detektors (7.2) angeordnet sind.

5. Positionsmessgerät nach Anspruch 2, **dadurch gekennzeichnet, dass** in einem Drehpunkt die Lichtquelle und der Schwerpunkt der lichtempfindlichen Elemente des Detektors angeordnet ist und im anderen Drehpunkt ein retroreflektierendes Element.

6. Positionsmessgerät nach einem der vorhergehenden Ansprüche 1 bis 5, **dadurch gekennzeichnet, dass** die Gelenke kardanische Gelenke sind.

7. Positionsmessgerät nach einem der Ansprüche 1 bis 5, **dadurch gekennzeichnet, dass** die Gelenke (2, 4) magnetisch vorgespannte Kugelgelenke sind.

8. Positionsmessgerät nach einem der vorhergehenden Ansprüche 1 bis 7, **dadurch gekennzeichnet, dass** die Stütze (3) teleskopartig ausgebildet ist und eine Abdeckung für die Winkelmesseinrichtung (7) bildet, und dass an einem Teleskopteil (3.1) ein Maßstab (6.1) und am anderen Teleskopteil (3.2) eine den Maßstab (6.1) abtastende Abtasteinheit (6.2) der Längenmesseinrichtung (6) befestigt ist.

9. Positionsmessgerät nach einem der vorhergehenden Ansprüche 1 bis 7, **dadurch gekennzeichnet, dass** die Längenmesseinrichtung ein Interferometer (60) ist.

10. Positionsmessgerät nach Anspruch 9, **dadurch gekennzeichnet, dass** das Licht einer gemeinsamen Lichtquelle (64) zur Winkelmessung und zur Längenmessung in zwei Teilstrahlenbündel (L1, L2) aufgeteilt wird.

11. Positionsmessgerät nach einem der vorhergehenden Ansprüche, **dadurch gekennzeichnet, dass** das Gitter (7.3) ein zweidimensionales Kreuzgitter ist, das ein zweidimensionales Intensitätsmuster (M) erzeugt, dessen Lage relativ zum Detektor (7.2) ein Maß für den Winkel ist.

12. Positionsmessgerät nach einem der vorhergehenden Ansprüche, **dadurch gekennzeichnet, dass** dieses zur Überprüfung der Positioniergenauigkeit eines programmgesteuerten Maschinenteils (5') verwendet wird, indem das bewegliche Element (5) an dem programmgesteuerten Maschinenteil (5') festgelegt ist und der Grundkörper (1) an einem Basisteil (1') der Maschine festgelegt ist.

## Claims

1. Position measuring device for detecting the spatial position of a movable element (5) relative to a base body (1), comprising:
- a length-adjustable support (3, 11) connecting said movable element (5, 8) with said base body (1);
- a joint (2) with which said support (3, 11) is mounted pivotably about a center of rotation (D2) in said base body (1);
- a length measuring system (6) for measuring the distance of said movable element (5, 8) relative to said base body (1) along said support (3, 11);
- an angle measuring system (7) for measuring an angle between said movable element (5, 8) and said base body (1), having at least one light source (7.1), one detector (7.2) and one grating (7.3) within the beam path between said light source (7.1) and said detector (7.2), wherein for measuring said angle said beam path (L) extends between said movable element (5, 8) and said base body (1) so that an intensity strip pattern (M) is generated by illuminating said grating (7.3) with said light source (7.1), whose position relative to said detector (7.2) is a measure of the angle.

2. Position measuring device according to Claim 1, **characterized in that** a further joint (4) is arranged between said support (3) and said movable element (5), with which the movable element (5) is mounted pivotably about a center of rotation (D4) on the support (3).

3. Position measuring device according to Claim 1, **characterized in that** said light source (7.1) or the center of gravity of the light-sensitive elements of said detector (7.2) is arranged in said center of rotation (D2).

4. Position measuring device according to Claim 2, **characterized in that** said light source (7.1) is arranged in one center of rotation (D2, D4) and the center of gravity of the light-sensitive elements of said detector (7.2) is arranged in the other center of rotation (D4, D2).

5. Position measuring device according to Claim 2, **characterized in that** the light source and the center of gravity of the light-sensitive elements of the detector are arranged in one center of rotation, and a retroreflecting element in the other center of rotation.

6. Position measuring device according to any one of the preceding Claims 1 through 5, **characterized in that** the joints are gimbal-mounted joints.

7. Position measuring device according to any one of the Claims 1 through 5, **characterized in that** said joints (2, 4) are magnetically preloaded ball joints.

8. Position measuring device according to any one of the preceding Claims 1 through 7, **characterized in that** said support (3) is designed telescopically and forms a cover for said angle measuring system (7), and **in that** a scale (6.1) is fastened to a first telescoping portion (3.1), and a scanning unit (6.2) of said length measuring system (6) is fastened to a second telescoping portion (3.2) and scans said scale (6.1).

9. Position measuring device according to any one of the preceding Claims 1 through 7, **characterized in that** the length measuring system is an interferometer (60).

10. Position measuring device according to Claim 9, **characterized in that** the light of a shared light source (64) is split into two partial beams (L1, L2) for angle measurement and length measurement.

11. Position measuring device according to any one of the preceding claims, **characterized in that** said grating (7.3) is a two-dimensional cross grating that generates a two-dimensional intensity pattern (M), whose position relative to said detector (7.2) is a measure of said angle.

12. Position measuring device according to any one of the preceding claims, **characterized in that** this position measuring device is used to check the positioning accuracy of a program-controlled machine part (5'), wherein said movable element (5) is fixed on said program-controlled machine part (5') and said base body (1) is fixed on a basic part (1') of the machine.

## Revendications

1. Appareil de mesure de position pour l'acquisition de la position spatiale d'un élément mobile (5) par rapport à un corps de base (1) comprenant :
- un support de longueur variable (3, 11) qui assure la liaison dudit élément mobile (5, 8) avec ledit corps de base (1);
- une articulation (2), avec laquelle ledit support (3, 11) peut pivoter autour d'un point de pivot (D2) dans ledit corps de base (1);
- un dispositif de mesure de longueur (6) pour la mesure de la distance entre ledit élément mobile (5, 8) et ledit corps de base (1) le long dudit support (3, 11);
- un dispositif de mesure d'angle (7) pour la mesure d'un angle entre ledit élément mobile (5, 8) et ledit corps de base (1) avec au moins une source lumineuse (7.1), un détecteur (7.2) et un réticule (7.3) placé sur le trajet des rayons lumineux entre ladite source lumineuse (7.1) et ledit détecteur (7.2), le trajet des rayons lumineux (L) pour la mesure de l'angle passant entre ledit élément mobile (5.8) et ledit corps de base (1), en créant par l'éclairage dudit réticule (7.3) avec ladite source lumineuse (7.1) un modèle de bande d'intensité (M), dont la position par rapport audit détecteur (7.2) est une mesure pour l'angle.

2. Appareil de mesure de position selon la revendication 1, **caractérisé en ce qu'**une autre articulation (4) est disposée entre ledit support (3) et ledit élément mobile (5), avec laquelle ledit élément mobile (5) peut pivoter autour d'un point de pivot (D4) situé sur ledit support (3).

3. Appareil de mesure de position selon la revendication 1, **caractérisé en ce que** ladite source lumineuse (7.1) ou le centre de gravité de l'élément photosensible dudit (7.2) détecteur est placé audit point de pivot (D2).

4. Appareil de mesure de position selon la revendication 2, **caractérisé en ce que** ladite source lumineuse (7.1) est placée à un point de pivot (D2, D4) et le centre de gravité des éléments photosensibles dudit détecteur (7.2) à un autre point de pivot (D4, D2).

5. Appareil de mesure de position selon la revendication 2, **caractérisé en ce que** ladite source lumineuse et le centre de gravité des éléments photosensibles du détecteur est placé à un point de pivot et un élément rétroréfléchissant à un autre point de pivot.

6. Appareil de mesure de position selon l'une des revendications précédentes 1 à 5, **caractérisé en ce que** les articulations sont des joints de cardan.

7. Appareil de mesure de position selon l'une des revendications 1 à 5, **caractérisé en ce que** lesdites articulations (2, 4) sont des rotules à précontrainte magnétique.

8. Appareil de mesure de position selon l'une des revendications précédentes 1 à 7, **caractérisé en ce que** ledit support (3) est de construction télescopique et sert de protection audit dispositif de mesure d'angle (7), et qu'une règle de mesure (6.1) est fixée à une partie télescopique (3.1) et une unité de balayage (6.2) de ladite règle de mesure (6.1) dudit dispositif de mesure de longueur (6) à l'autre partie télescopique (3.2).

9. Appareil de mesure de position selon l'une des revendications précédentes 1 à 7, **caractérisé en ce que** le dispositif de mesure de longueur est un interféromètre (60).

10. Appareil de mesure de position selon la revendication 9, **caractérisé en ce que** la lumière d'une source lumineuse commune (64) est subdivisée en deux faisceaux partiels (L1, L2) pour la mesure d'angle et la mesure de longueur.

11. Appareil de mesure de position selon l'une des revendications précédentes, **caractérisé en ce que** ledit réticule (7.3) est un réseau croisé en deux dimensions, qui génère un modèle d'intensité (M) en deux dimensions, dont la position par rapport audit détecteur (7.2) est une mesure pour l'angle.

12. Appareil de mesure de position selon l'une des revendications précédentes, **caractérisé en ce que** celui-ci est utilisé pour le contrôle de la précision de positionnement d'une partie de machine (5') commandée par programme, ledit élément mobile (5) étant solidaire de ladite partie de machine (5') commandée par programme et ledit corps de base (1) fixé à une base (1') de la machine.
